Europäisches Patentamt

European Patent Office

Office européen des brevets

(11) Publication number: **0 513 913 A2**

# EUROPEAN PATENT APPLICATION

(21) Application number: **92201318.0**

(22) Date of filing: **08.05.92**

(51) Int. Cl.5: **C08L 69/00**, C08L 33/10,
//(C08L69/00,33:10),(C08L33/10,
69:00)

(30) Priority: **15.05.91 JP 110110/91**

(43) Date of publication of application:
**19.11.92 Bulletin 92/47**

(84) Designated Contracting States:
**DE FR GB**

(71) Applicant: **SUMITOMO CHEMICAL COMPANY,
LIMITED**
**Kitahama 4-chome 5-33**
**Chuo-ku Osaka 541(JP)**
Applicant: **SUMITOMO DOW LIMITED**
**2-4, Nakanoshima 3-chome, Kita-ku**
**Osaka-shi, Osaka 530(JP)**

(72) Inventor: **Hosoda, Satoru**
**872-2, Saihiro**
**Ichihara-shi, Chiba-ken(JP)**
Inventor: **Ikawa, Kiyoshi**
**5-4-7, Hirose, Shimamoto-cho**
**Mishima-gun, Osaka-fu(JP)**

(74) Representative: **von Kreisler, Alek,
Dipl.-Chem. et al**
**Patentanwälte Von Kreisler-Selting-Werner,
Deichmannhaus am Hauptbahnhof**
**W-5000 Köln 1(DE)**

(54) **Thermoplastic resin composition.**

(57) A thermoplastic resin containing 10 to 90 parts by weight of a polycarbonate resin and 90 to 10 parts by weight of a copolymer which comprises 1 to 50 % by weight of a N-substituted maleimide and 99 to 50 % by weight of an alkyl ester of an unsaturated carboxylic acid, which has good property balance among heat resistance, impact resistance, stiffness, processability and transparency.

EP 0 513 913 A2

## BACKGROUND OF THE INVENTION

### Field of the Invention

The present invention relates to a thermoplastic resin composition. More particularly, the present invention relates to a thermoplastic resin composition having good property balance among heat resistance, impact resistance, stiffness, processability and transparency, namely, a thermoplastic resin composition which satisfies all the above properties at practically required levels.

### Description of the Related Art

While a polycarbonate resin is excellent in heat resistance, impact resistance and transparency, it has poor processability due to its high molding temperature and poor stiffness.

To improve such drawbacks of the polycarbonate resin, many proposals have been made, for example, addition of a styrene base resin such as ABS (acrylonitrile-butadiene-styrene) to a polycarbonate resin (see Japanese Patent Publication Nos. 15225/1963, 71/1964 and 2454/1976), and addition of an acrylic resin such as polymethyl methacrylate to a polycarbonate resin (see Japanese Patent Publication Nos. 46428/1971, 54774/1972 and 38463/1972). However, none of the prior arts can provide a composition which achieves the practically required levels in all of heat resistance, impact resistance, stiffness, processability and transparency, namely a composition having good balance among those properties.

## SUMMARY OF THE INVENTION

An object of the present invention is to provide a thermoplastic resin composition comprising a polycarbonate resin which achieves the practically required levels in all of heat resistance, impact resistance, stiffness, processability and transparency, namely a composition having good balance among those properties.

Herein, "transparency" intends to mean transparency of the resin at room temperature and also at elevated temperature.

According to the present invention, there is provided a thermoplastic resin comprising:

(A) 10 to 90 parts by weight of a polycarbonate resin and

(B) 90 to 10 parts by weight of a copolymer which comprises 1 to 50 % by weight of a N-substituted maleimide and 99 to 50 % by weight of an alkyl ester of an unsaturated carboxylic acid.

## DETAILED DESCRIPTION OF THE INVENTION

The polycarbonate resin (A) includes aromatic polycarbonate resins, aliphatic polycarbonate resins, aliphatic-aromatic polycarbonate resins, and the like. Specific examples of the polycarbonate resin are homopolymers or copolymers of bisphenols such as 2,2-bis(4-oxyphenyl)alkanes, bis(4-oxyphenyl)ethers, bis(4-oxyphenyl)sulfones, bis(4-oxyphenyl)sulfides, bis(4-oxyphenyl)sulfoxides, etc. It may be possible to use a polycarbonate comprising a halogen-substituted bisphenol.

A molecular weight of the polycarbonate resin (A) is not critical. In view of the balance between impact resistance and processability, the polycarbonate resin (A) preferably has a viscosity average molecular weight of 10,000 to 50,000.

The polycarbonate resin (A) may be prepared by any of conventional methods, for example, a so-called phosgene method, a transesterification method, etc.

The copolymer (B) comprises 1 to 50 % by weight of the N-substituted maleimide and 99 to 50 % by weight of the alkyl ester of the unsaturated carboxylic acid.

Examples of the N-substituted maleimide are N-phenylmaleimide, N-cyclohexylmaleimide, N-(p-methylphenyl)maleimide, N-hydroxyethylmaleimide, and the like. They may be used independently or as a mixture thereof.

The alkyl group in the unsaturated carboxylate may be a straight or branched one and has preferably 1 to 10 carbon atoms, more preferably 1 to 9 carbon atoms.

The unsaturated carboxylic acid includes acrylic acid, methacrylic acid, maleic acid, fumaric acid, itaconic acid, and the like.

Preferred examples of the alkyl ester of the unsaturated carboxylic acid are methyl (meth)acrylate, ethyl (meth)acrylate, propyl (meth)acrylate, 2-ethylhexyl (meth)acrylate, and the like.

A content of the N-substituted maleimide in the copolymer (B) is usually from 1 to 50 % by weight,

2

preferably from 1 to 30 % by weight, while a content of the alkyl ester of the unsaturated carboxylic acid is from 99 to 50 % by weight, preferably from 99 to 70 % by weight.

When the content of the N-substituted maleimide is smaller than 1 % by weight, the resin composition is poor in impact resistance and transparency at room temperature and an elevated temperature. When the content of the alkyl ester of the unsaturated carboxylic acid is smaller than 50 % by weight, the resin composition is poor in impact resistance and transparency at room temperature and an elevated temperature as well as processability.

A molecular weight of the copolymer (B) is not critical. In view of the balance between impact resistance and processability, the copolymer (B) preferably has a weight average molecular weight of 10,000 to 1,000,000.

A preferred example of the copolymer (B) is a copolymer comprising 1 to 30 % by weight of N-phenylmaleimide and 99 to 70 % by weight of methyl (meth)acrylate.

The copolymer (B) may be prepared by any of conventional methods such as emulsion polymerization, suspension polymerization, bulk polymerization, solution polymerization or a combination thereof.

The thermoplastic resin composition of the present invention comprises 10 to 90 parts by weight, preferably 30 to 90 parts by weight of the polycarbonate (A) and 90 to 10 parts by weight, preferably 70 to 10 parts by weight of the copolymer (B).

When the amount of the polycarbonate (A) is smaller than 10 parts by weight, the thermoplastic resin composition has poor heat resistance and impact resistance. When the amount of the copolymer (B) is smaller than 10 parts by weight, the thermoplastic resin composition has poor stiffness and processability.

The thermoplastic resin composition of the present invention may be prepared by mixing the polycarbonate resin (A) and the copolymer (B) by a per se conventional method using a Banbury mixer, rolls or an extruder.

Optionally, it may be possible to add a conventional additive such as an antioxidant, a UV-light absorber, a light stabilizer, etc. during mixing of the components.

The thermoplastic resin composition of the present invention is excellent in all of heat resistance, impact resistance, stiffness, processability and transparency. Utilizing such good balance of the properties, the thermoplastic resin composition of the present invention can be used in various fields, for examples, in the production of automobile parts such as a rear light cover, an instrument panel plate, etc.; an arcade; electric equipment parts such as a light shade; display panels; and the like.

PREFERRED EMBODIMENTS OF THE INVENTION

The present invention will be illustrated by the following Examples, in which "%" and "parts" are by weight.

Example 1

A bisphenol A resin (Caliver (trade name) 300-10 having a viscosity average molecular weight of 20,000 manufactured by Sumitomo Dow Co., Ltd.) (80 parts) as the polycarbonate (A) and a copolymer of 30 % of N-phenylmaleimide and 70 % of methyl methacrylate having a weight average molecular weight of 100,000 (manufactured by emulsion polymerization) (20 parts) as the copolymer (B) were molten and mixed using a twin screw extruder having a diameter of 40 mm at 250°C and pelletized. With the produced resin composition, following properties (1) to (6) were evaluated:

(1) Heat resistance (HDT)

According to ASTM D-648, 18.6 kg/cm$^2$, no annealing

(2) Impact resistance (Notched Izod)

According to ASTM D-256 at 23°C

(3) Stiffness (flexural modulus)

According to ASTM D-790 at 23°C

(4) Processability (flowability, MI)

3

According to ASTM D-1238 at 300°C with a melt-indexer

(5) Transparency at room temperature

A flat plate (90 mm x 150 mm x 3 mm (thickness)) was obtained by injection molding at 250°C and its transparency was evaluated with naked eyes at room temperature and graded "good" (O) or "bad" (X).

(6) Transparency at elevated temperature

A mixture of the polycarbonate resin (A) and the copolymer (B) in the same weight ratio as that for the preparation of the above composition was dissolved in tetrahydrofrane (THF) and then precipitated by adding n-heptane. The precipitated mixture was heat press molded at 160°C to obtain a sample plate having a thickness of 1 mm. The sample plate was set on a microscope equipped with a heating stage and a photomultiplier and heated at a heating rate of 10°C/min., during which decrease of an intensity of transmitted light was observed and a temperature at which the intensity of transmitted light started to decrease (clouding temperature, Tc) was measured.

All the results are shown in the Table.

Examples 2-3 and Comparative Examples 1-5

In the same manner as in Example 1 but using each composition shown in the Table, the experiments were carried out. The results are shown in the Table.

With the thermoplastic resin compositions of Examples which satisfy the requirements of the present invention, the results of heat resistance, impact resistance, stiffness, processability and transparency are all satisfactory.

With the composition of Comparative Example 1 which contained the polycarbonate resin in an amount smaller than the range of the present invention, heat resistance and impact resistance are unsatisfactory.

With the composition of Comparative Example 2 which contained the copolymer (B) in an amount smaller than the range of the present invention, stiffness and processability are unsatisfactory.

With the compositions of Comparative Examples 3 and 4 which contained the N-substituted maleimide in the copolymer (B) in an amount smaller than the range of the present invention, impact resistance and transparency are unsatisfactory.

With the composition of Comparative Example 5 which contained the alkyl ester of the unsaturated carboxylic acid in the copolymer (B) in an amount smaller than the range of the present invention, impact resistance, processability and transparency are unsatisfactory.

4

Table

| Example No. | 1 | 2 | 3 | C.1 | C.2 | C.3 | C.4 | C.5 |
|---|---|---|---|---|---|---|---|---|
| Composition (parts) | | | | | | | | |
| Polycarbonate (A) | 80 | 40 | 20 | 5 | 95 | 80 | 20 | 80 |
| Copolymer (B) | 20 | 60 | 80 | 95 | 5 | 20 | 80 | 20 |
| -NPM[*1] (%) | 30 | 10 | 30 | 10 | 10 | 0.5 | 0.5 | 70 |
| -MMA[*2] (%) | 70 | 90 | 70 | 90 | 90 | 99.5 | 99.5 | 30 |
| Properties | | | | | | | | |
| Heat resistance (°C) | 126 | 119 | 114 | 110 | 131 | 122 | 112 | 140 |
| Impact resistance (kg.cm/cm) | 61 | 21 | 12 | 5 | 70 | 4 | 8 | 6 |
| Stiffness (kg/cm$^2$) | 3.0 | 3.6 | 4.1 | 4.3 | 2.5 | 2.8 | 3.9 | 2.7 |
| Processability (cc/10 min.) | 20 | 30 | 40 | 35 | 5 | 18 | 45 | 15 |
| Transparency | | | | | | | | |
| Room temp. | O | O | O | O | O | X | X | X |
| Elevated temp. (°C) | 283 | 270 | 281 | 267 | 276 | 213 | 230 | 224 |

Notes: *1)   N-Phenylmaleimide.
*2)   Methyl methacrylate.

## Claims

1. A thermoplastic resin comprising:
   (A) 10 to 90 parts by weight of a polycarbonate resin and
   (B) 90 to 10 parts by weight of a copolymer which comprises 1 to 50 % by weight of a N-substituted maleimide and 99 to 50 % by weight of an alkyl ester of an unsaturated carboxylic acid.

2. The thermoplastic resin composition according to claim 1, wherein said polycarbonate resin has a viscosity average molecular weight of 10,000 to 50,000.

3. The thermoplastic resin composition according to claim 1, wherein said N-substituted maleimide is at least one selected from the group consisting of N-phenylmaleimide, N-cyclohexylmaleimide, N-(p-methylphenyl)maleimide and N-hydroxyethylmaleimide.

4. The thermoplastic resin composition according to claim 1, wherein said alkyl ester of the unsaturated carboxylic acid is one selected from the group consisting of methyl (meth)acrylate, ethyl (meth)acrylate, propyl (meth)acrylate and 2-ethylhexyl (meth)acrylate.

5. The thermoplastic resin composition according to claim 1, wherein said copolymer (B) comprises 1 to 30 % by weight of said N-substituted maleimide and 99 to 70 % by weight of said alkyl ester of the unsaturated carboxylic acid.

6. The thermoplastic resin composition according to claim 1, wherein said copolymer has a weight average molecular weight of 10,000 to 1,000,000.

7. The thermoplastic resin composition according to claim 1, wherein said copolymer (B) comprises 1 to 30 % by weight of N-phenylmaleimide and 99 to 70 % by weight of methyl (meth)acrylate.

8. The thermoplastic resin composition according to claim 1, which comprises 30 to 90 parts by weight of said polycarbonate resin (A) and 70 to 10 parts by weight of said copolymer (B).